# EUROPÄISCHE PATENTSCHRIFT

(11) **EP 2 667 457 B1**
(45) Veröffentlichungstag und Bekanntmachung des Hinweises auf die Patenterteilung: **12.04.2017**
(21) Anmeldenummer: 13000823.8
(22) Anmeldetag: 19.02.2013
(51) Int. Cl.: B60T 17/22, H01R 12/58, F16D 66/02, H01R 13/52

(54) **Gehäuseschale für einen Verschleisssensor einer Fahrzeugbremsanlage**
Housing shell for a wear sensor of a vehicle braking system
Coque de boîtier pour un capteur d'usure d'une installation de freinage de véhicule

(30) Priorität: 23.05.2012 CH 7182012
(43) Veröffentlichungstag der Anmeldung: 27.11.2013
(73) Patentinhaber: Kunststoff Schwanden AG, 8762 Schwanden (CH)
(72) Erfinder: Kiener, Albert, 8753 Mollis (CH); Küsperth, Josef, 8762 Schwanden (CH)
(74) Vertreter: Quehl, Horst Max

(56) Entgegenhaltungen:
- EP-A2- 2 026 418
- WO-A1-2007/014797
- DE-A1-102005 061 033
- DE-A1-102006 049 901
- US-A1- 2009 239 398

## Beschreibung

Die Erfindung betrifft eine Gehäuseschale für einen Verschleisssensor einer Fahrzeugbremsanlage mit den Merkmalen des einleitenden Teils des Patentanspruchs 1.

Gehäuseschalen für Verschleisssensoren von druckluftbetätigten Scheibenbremsanlagen sind in verschiedenen Ausführungsformen z.B. durch die EP0566006 (Fig.3 und 4), die DE4230831 oder die DE102006042777 bekannt.

Entsprechend der DE4230831 ist für den Anschluss einer einzelnen elektrischen Signalleitung an die Gehäuseschale seitlich ein Stutzen mit einer Schraubkappe vorgesehen, so dass die Signalleitung zusammen mit einer Dichtmanschette von aussen soweit in Richtung zu der als Potentiometer ausgeführten elektromechanischen Baueinheit eingeschoben werden kann, dass ihr freies Kabelende eine Position erhält, in der sie mit einer zur ihr hin abgebogenen Kontaktfahne innerhalb eines freigelassen Spaltraumes verlötet werden kann.

Durch die DE 0 2005 061 033 ist ein mehrpoliger elektrischer Steckverbinder für die Montage in einem Aufnahmeloch einer dünnen Gehäusewand z.B. aus Blech bekannt, der einen inneren Hülsenkörper aufweist, der mit einem äusseren Adapterkörper verrastet und mittels O-Ring abgedichtet ist. Die Befestigung im Aufnahmeloch erfolgt klemmend mittels einer den Adapterkörper umschliessenden Schraubhülse. Für einen Verschleisssensor ist ein solches Befestigungssystem eines Steckverbinders nicht geeignet.

Ausserdem zeigt die EP2026418 derselben Anmelderin eine Ausführungsform einer Gehäuseschale mit den Merkmalen der Oberbegriffs des Patentanspruchs 1.

Bekannte Gehäuseschalen für Verschleisssensoren sind aufgrund sehr hoher Anforderungen an ihre Widerstandsfähigkeit gegenüber dynamischen und thermischen Beanspruchungen entweder, entsprechend der EP 2 026 418, nur mit verhältnismässig grossen Aufwand herstellbar oder sie erfüllen nicht dauerhaft diese Anforderungen.

Der Erfindung liegt die Aufgabe zugrunde, eine Gehäuseschale der eingangs genannten Art zu finden, die kompakter, einfacher bzw. kostensparender herstellbar ist und die dennoch eine zuverlässige Abdichtung im Bereich der Steckereinheit gewährleistet.

Die Lösung dieser Aufgabe erfolgt aufgrund der Merkmale des Patentanspruchs 1. \/orteilhafte Ausgestaltungen der Erfindung können der folgenden Beschreibung anhand der Zeichnungen entnommen werden. Diese zeigen in:
Fig.1 einen Querschnitt durch eine Gehäuseschale entlang der Linie A-A der Fig.6,
Fig.2 eine perspektivische Teildarstellung der Gehäuseschale nach Fig.1,
Fig.3 perspektivische Teildarstellungen der Gehäuseschale nach Fig.1 entsprechend drei aufeinanderfolgenden Montagepositionen einer Steckereinheit und elektromechanischen Baueinheit
Fig.4 einen Teilquerschnitt entlang der Linie C - C der Fig.6. im Bereich einer Verrastung zwischen Gehäuseschale und elektromechanischer Baueinheit,
Fig.5 eine perspektivische Darstellung des in Fig.1 und Fig.7 dargestellten Kontaktbereichs V zwischen elektrischen Leitern und einer Leiterplatte der elektromechanischen Baueinheit,
Fig.6 eine Aufsicht auf eine Gehäuseschale nach Fig.1 oder Fig.7,
Fig.7 einen Querschnitt durch eine Gehäuseschale entlang der Linie A -A der Fig.6 und
Fig.8 einen Teilquerschnitt entlang der Linie B - B der Fig.6 im Bereich einer Verrastung zwischen Gehäuseschale und elektromechanischer Baueinheit,

Die Gehäuseschale 1 umschliesst in einem nach unten ausgenommen Bereich 2 eine elektromechanische Baueinheit 3 mit einer Leiterplatte 4. An dieser ist beispielsweise u.a. die Widerstandsschicht 5 eines Potentiometers vorgesehen, dessen Schleifkontakte über ein Planetengetriebe 6 bewegt werden, das eine Antriebsverbindung mit einer nichtdargestellten Stellschraube einer Fahrzeugbremsanlage aufweist.

Zur dichten Befestigung an einer fremden Gehäusewand, z.B. einer Fahrzeugbremsanlage hat die Gehäuseschale 1 einen flanschartig umlaufenden Rand 7, in dem eine Dichtung 8 eingelassen ist.

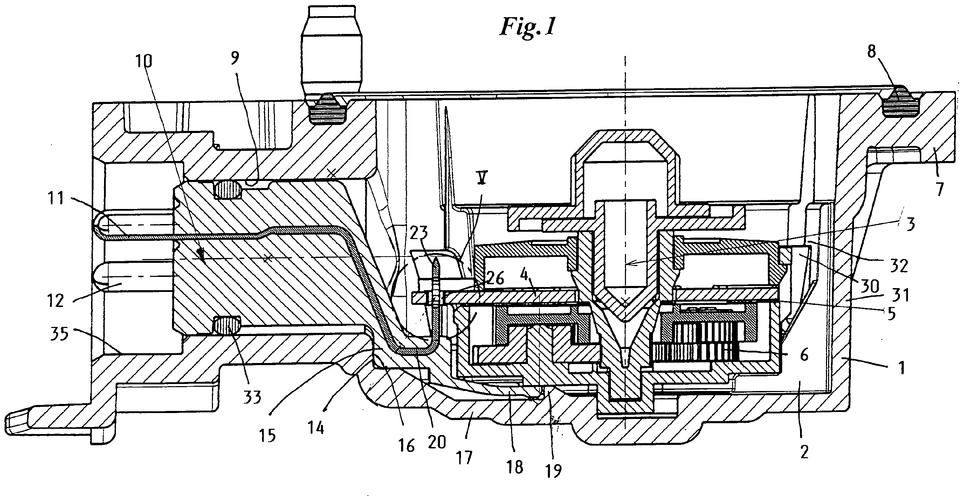

Um diese elektromechanische Baueinheit 3 z.B. zur Signalübertragung elektrisch mit einer entfernt und ausserhalb der Gehäuseschale 1 vorgesehenen elektronischen Anlage zu verbinden, ist entsprechend einem ersten Ausführungsbeispiel der Erfindung entsprechend den Darstellungen in Fig.1 bis Fig.6 in einem Seitenkanal 9 der Gehäuseschale 1 eine Steckereinheit 10 von innen eingeschoben. Ihre elektrischen Leiter 11 - 13 sind in einem gemeinsamen Kunststoffkörper der Steckereinheit 10 eingeschlossen und somit gegenseitig isoliert und fest zueinander fixiert.

Die Positionierung der elektrischen Leiter 11 -13 kann abhängig von der meist vorgegebenen Positionierung der elektrischen Leiter eines nichtdargestellten äusseren Anschlussteckers unterschiedlich sein, z.B. in Reihenanordnung oder in Dreieckanordnung mit unterschiedlichen Abständen. Durch modulartige Bereitstellung entsprechend verschiedener Steckereinheiten 10 können bei diesem Ausführungsbeispiel der Erfindung auf einfache Weise diese Unterschiede berücksichtigt werden, ohne dass an der Gehäuseschale 1 oder der elektromechanischen Baueinheit 3 Änderungen vorzunehmen sind.

Für die Fixierung der axialen Position der Steckereinheit 10 relativ zur Gehäuseschale 1 und damit auch zur elektromechanischen Baueinheit 3 hat die Steckereinheit 10 einen eine Schulterfläche 14 bildenden, seitlich abstehenden Fortsatz 15, für den sie an einem inneren Absatz 16 der Gehäuseschale 1 flanschartig einen Anschlag findet. Ausserdem setzt sich dieser seitliche Fortsatz 15 angenähert parallel zur Bodenwand 17 der Gehäuseschale 1 in einer federnd ausbiegbaren Rastzunge 18 fort, die nach vollständigem Einschieben der Steckereinheit 10 in den Seitenkanal 9 hinter einer an der Innenseite der Bodenwand 17 angeformten Nase 19 einrastet.

Weiterhin dient der seitliche Fortsatz 15 der Steckereinheit 10 dem Einschluss und damit der starren Fixierung eines hakenförmig oder u-förmig gekrümmten Endbereichs 20 der elektrischen Leiter 11 - 13, bevor diese sich montagegerecht, quer zur Längsachse der Steckereinheit 10, frei in Richtung der offenen Seite der Gehäuseschale 1 erstrecken, so dass sie zu elektrischen Leitern 21, 22 der Leiterplatte 4 der elektromechanischen Baueinheit 3 hingerichtet sind, um mit diesen einen elektrischen Kontakt zu bilden.

Für die Herstellung der elektrischen Verbindung zwischen den entsprechend der Montageposition der Gehäuseschale 1 somit senkrecht nach oben gerichteten, freien inneren Enden 23 - 25 der elektrischen Leiter 11 - 13 der Steckereinheit 10 sind an den entsprechenden Stellen der Leiterplatte 4 der Baueinheit 3 Kontaktlöcher 26, 27 vorgesehen, so dass der elektrische Kontakt beim vertikalen Einsetzen der elektromechanischen Baueinheit 3 selbsttätig erfolgen kann. Hierzu erstrecken sich die elektrischen Leiter 21, 22 der Leiterplatte 4 der elektromechanischen Baueinheit 3 bis in ihre Kontaktlöcher 26, 27 hinein, so dass deren Innenfläche vom Material der elektrischen Leiter 21, 22 der Leiterplatte 4 hülsenförmig ausgekleidet ist.

Die freien Enden 23 -25 der elektrischen Leiter 11 - 13 der Steckereinheit 10 sind durch einen inneren Spalt- oder Hohlraum 28 quer federelastisch ausgebildet, so dass der elektrische Kontakt unter Federspannung bzw. mit Presskontakt in den Kontaktlöchern 26, 27 aufrechterhalten bleibt. Ein spitz auslaufendes oder einen sich nach aussen verjüngenden Querschnitt aufweisendes freies Ende 29 der elektrischen Leiter 11 - 13 der Steckereinheit 10 erleichtert deren Eindringen in die Kontaktlöcher 26,27 der Leiterplatte 4 und somit die Herstellung eines Presskontaktes. Folglich ergibt sich die Herstellung der elektrischen Verbindungen zwischen den Leitern 11 -13 der Steckereinheit 10 und denjenigen 21, 22 der elektromechanischen Baueinheit 3 auf einfache Weise bei deren Einfügen in die Gehäuseschale 1.

Dieses Einfügen der elektromechanischen Baueinheit 3 führt zur ihrer festen Verrastung in der Gehäuseschale 1. Hierfür sind an der elektromechanischen Baueinheit 3 mehrere federnd einbiegbare, schräg nach oben gerichtete Rastzungen 30 vorgesehen, die hinter einer im Bereich der Umfangswand 31 der Gehäuseschale 1 innen angeformten Rastnase 32 einrasten.

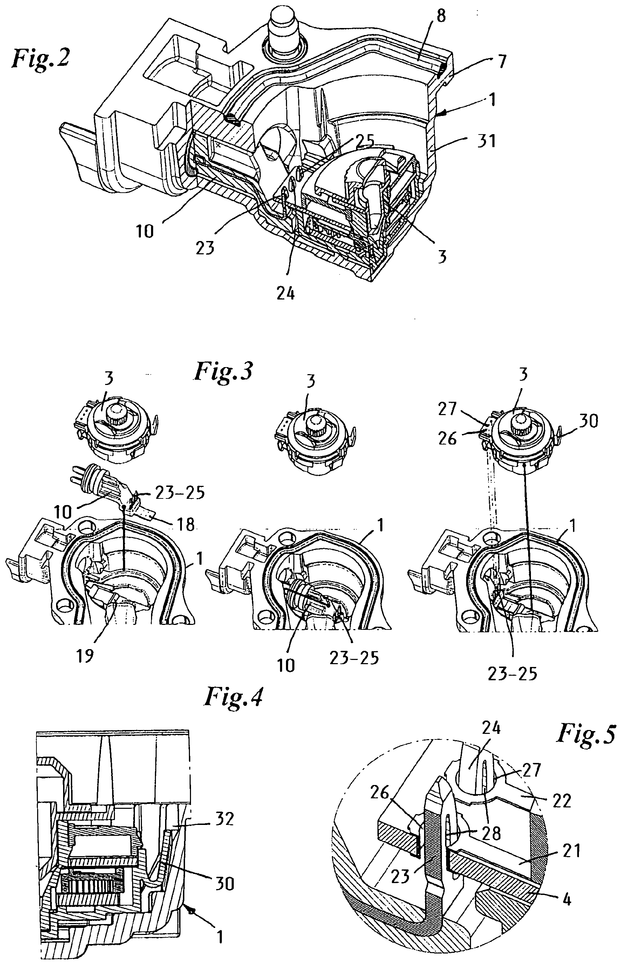

Die beschriebenen, aufeinander folgenden Stufen des Montageverfahrens sind durch die drei Darstellungen der Fig.3 veranschaulicht. Entsprechend wird zuerst die Steckereinheit 10 mit der dargestellten Ausrichtung in die Gehäuseschale 1 hinein abgesenkt, bis sie sich gleichachsig zu ihrem Seitenkanal 9 befindet. Aus der somit erhaltenen Position entsprechend der zweiten Darstellung der Fig.3 wird die Steckereinheit 10 anschliessend mit ihrem z.B. als O-Ring ausgeführten Dichtring 33 vom Innenraum der Gehäuseschale 1 aus kolbenartig in den Seitenkanal 9 eingeschoben, bis die Schulterfläche 14 ihres seitlichen Fortsatzes 15 an der inneren Schulterfläche 16 der Gehäuseschale 1 eine Anschlagposition findet. Danach erfolgt entsprechend der dritten Darstellung der Fig. 3 das Eindrücken und Einrasten der elektromechanischen Baueinheit 3, so dass ihre Kontaktlöcher 26, 27 mit ihren inneren Kontaktflächen auf die nach oben gerichteten freien Enden 23 -25 der elektrischen Leiter 11 - 13 der Steckereinheit 3 mit Presskontakt aufgeschoben werden.

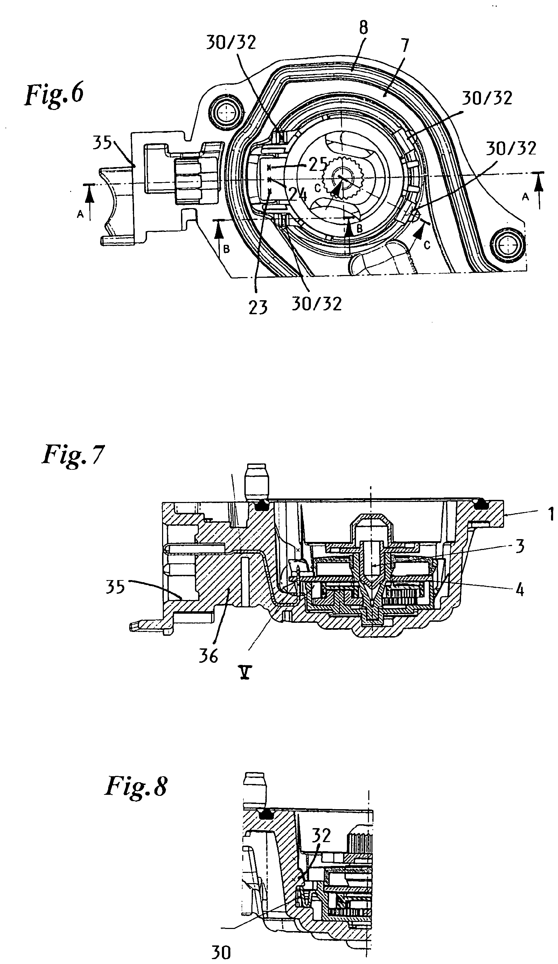

Das zweite Ausführungsbeispiel der Erfindung entsprechend der Darstellung in Fig.7 unterscheidet sich von demjenigen nach Fig.1 bis Fig.3 dadurch, dass auf die Möglichkeit einer modulartigen Bereitstellung verschiedener Steckereinheiten 10 verzichtet wird, indem die montagegerechte, feste Positionierung derelektrischen Leiter 11 - 13 mit ihren freien, nach obengerichteten Enden 23 - 25 anstatt im Kunststoffkörper einer Steckereinheit 10 im Kunststoffmaterial eines die äussere Anschlussbuchse 35 aufweisenden Seitenbereichs 36 der Gehäuseschale 1 erfolgt.

Die funktionsgerechte Zuordnung der elektrischen Leiter 11 - 13 bei der Herstellung der Gehäuseschale 1 durch Kunststoffspritzen erfordert besondere Massnahmen für ihre Fixierung in einer Spritzgiessform, so dass auch ihre Vorpositionierung durch ihre Anordnung in einem selbständig geformten Fixierkörper erfolgen kann, wie es an sich durch die EP2026418 bekannt ist.

## Patentansprüche

1. Gehäuseschale für einen Verschleisssensor einer Fahrzeugbremsanlage, die in einem ausgenommenen Bereich (2) eine, eine Leiterplatte (4) aufweisende elektromechanische Baueinheit (3) des Verschleisssensors und in einem aus Kunststoffmaterial ausgebildeten Seitenkanal (9) der Gehäuseschale eine von innen ein geschobene Steckereinheit (10) umschliesst, wobei in der Steckereinheit (1) mehrere, einen gekrümmtem Verlauf aufweisende elektrische Leiter (11 - 13) eingeschlossen sind, deren innere Enden (23 - 25) sich senkrecht durch die Leiterplatte (4) hindurch erstrecken, **dadurch gekennzeichnet, dass** der Seitenkanal (9) zylindrisch geformt ist und einen mindestens einen Dichtring (33) tragenden zylindrischen Bereich der Steckereinheit (10) formschlüssig umschliesst, die Steckereinheit (10) einen seitlichen, eine Schulterfläche (14) bildenden Fortsatz (15) aufweist, mit dem sie an einem im Innenraum der Gehäuseschale (1) vorgesehener Absatz (16) anliegt, die inneren Enden (23 -25) der elektrischen Leiter (11 - 13) der Steckereinheit (10) unter Vorspannung in Kontaktöffnungen (26 -27) der Leiterplatte (4) der elektromechanischen Baueinheit (3) eingreifen und der seitliche Fortsatz (15) der Steckereinheit (10) sich in einer federnd ausbiegbaren Rastzunge (18) fortsetzt, die an einer Bodenwand (17) der Gehäuseschale (1) verrastet ist.

2. Gehäuseschale nach Anspruch 1, **dadurch gekennzeichnet, dass** die Steckereinheit (10) mit einem im Innenraum der Gehäuseschale (1) angeordneten, seitlichen, die Schulterfläche (14) bildenden Fortsatz (15) einen hakenförmig verlaufenden Teil (20) der in ihr eingeschlossenen Leiter (11 - 13) umschliesst.

3. Gehäuseschale nach Anspruch 1 oder 2, **dadurch gekennzeichnet, dass** an der elektromechanischen Baueinheit (3) mehrere schräg nach oben gerichtete Rastzungen (30) vorgesehen sind, die hinter einer im Bereich der Umfangswand (31) der Gehäuseschale (1) innen angeformte Rastnase (32) eingerastet sind.

## Claims

1. Housing shell for an abrasion sensor of a vehicle braking system, which encloses, in an excluded region (2), an electromechanical unit (3) of the abrasion sensor having a circuit board (4) and, in a side channel (9) of the housing shell formed from plastic material, a plug unit (10) inserted from inside, wherein several electrical conductors (11 - 13) having a curved course are included in the plug unit (1), the inner ends (23 - 25) of which extend perpendicularly through the circuit board (4), **characterised in that** the side channel (9) is formed to be cylindrical and encloses, in a positive manner, a cylindrical region of the plug unit (10) that supports at least one sealing ring (33), the plug unit (10) has a lateral extension (15) forming a shoulder surface (14), with which lateral extension it abuts onto a protrusion (16) provided in the inner space of the housing shell (1), the inner ends (23 - 25) of the electrical conductor (11 - 13) of the plug unit (10) engage with contact openings (26 - 27) of the conductor plate (4) of the electromechanical unit (3) under prestressing, and the lateral extension (15) of the plug unit (10) is extended in a locking tongue (18) which is able to bend in an elastic manner and which is locked into place on a base wall (17) of the housing shell (1).

2. Housing shell according to claim 1, **characterised in that** the plug unit (10) having a lateral extension (15) arranged in the inner space of the housing shell (1) and forming the shoulder surface (14) encloses a part (20), running in a hook shape, of the conductors (11 - 13) included in it.

3. Housing shell according to claim 1 or 2, **characterised in that** several locking tongues (30) pointing upwards at an angle are provided on the electromechanical unit (3), said locking tongues being locked behind a locking catch (32) formed internally in the region of the peripheral wall (31) of the housing shell (1).

## Revendications

1. Coque de boîtier pour un capteur d'usure d'un système de freinage pour véhicule, qui entoure, dans une partie évidée (2), un module électromécanique (3) du capteur d'usure présentant une carte de circuit imprimé (4) et une unité de connexion (10), dans un canal latéral (9) conçu dans une matière plastique de la coque de boîtier, insérée par l'intérieur, où, dans l'unité de connexion (1), plusieurs conducteurs électriques (11 à 13) présentant un profil courbé sont renfermés, dont les extrémités intérieures (23 à 25) s'étendent verticalement traversant la carte de circuit imprimé (4), **caractérisée en ce que** le canal latéral (9) est conçu de forme cylindrique et entoure par complémentarité de formes une partie cylindrique de l'unité de connexion (10) portant au moins une bague d'étanchéité (33), l'unité de connexion (10) présente une surface d'épaulement (14) latérale formant un appendice (15) par lequel elle est tangente avec un appendice (16) prévu sur l'espace intérieur de la coque de boîtier (1), les extrémités intérieures (23 à 25) des conducteurs électriques (11 à 13) de l'unité de connexion (10) sont en prise, moyennant une précontrainte, dans des ouvertures de contact (26 à 27) de la carte de circuit imprimé (4) du module électromécanique (3) et l'appendice latéral (15) de l'unité de connexion (10) se prolonge dans une languette de verrouillage (18), pouvant se déplier de manière élastique, qui est en prise sur une paroi de fond (17) de la coque de boîtier (1).

2. Coque de boîtier selon la revendication 1, **caractérisée en ce que** l'unité de connexion (10) entoure avec un appendice (15) latéral, disposé dans la partie intérieure de la coque de boîtier (1), formant la surface d'épaulement (14), une partie (20) s'étendant en forme de crochet des conducteurs (11 à 13) renfermés dans celle-ci.

3. Coque de boîtier selon la revendication 1 ou 2, **caractérisée en ce que** plusieurs languettes de verrouillage (30), orientées de manière oblique vers le haut, qui sont en prise derrière dans une partie avancée de verrouillage (32) formée à l'intérieur dans la partie de la paroi périphérique (31) de la coque de boîtier (1), sont prévues dans le module électromécanique (3).
